(19) Europäisches Patentamt
European Patent Office
Office européen des brevets

(11) Veröffentlichungsnummer: **0 177 674**
**B1**

(12) **EUROPÄISCHE PATENTSCHRIFT**

(45) Veröffentlichungstag der Patentschrift: **29.08.90**

(21) Anmeldenummer: **85107932.7**

(22) Anmeldetag: **26.06.85**

(51) Int. Cl.$^5$: **C 08 K 9/06,** C 08 L 21/00, C 09 C 3/12 // (C08K9/06, 3:36)

# (54) An der Oberfläche modifizierte synthetische silikatische Füllstoffe, ein Verfahren zur Herstellung und deren Verwendung.

(30) Priorität: **12.10.84 DE 3437473**

(43) Veröffentlichungstag der Anmeldung: **16.04.86 Patentblatt 86/16**

(45) Bekanntmachung des Hinweises auf die Patenterteilung: **29.08.90 Patentblatt 90/35**

(84) Benannte Vertragsstaaten: **DE FR GB**

(56) Entgegenhaltungen: **FR-A-2 295 958** **US-A-3 997 356**

(73) Patentinhaber: **Degussa Aktiengesellschaft**
**Weissfrauenstrasse 9**
**D-6000 Frankfurt am Main 1 (DE)**

(72) Erfinder: **Kerner, Dieter, Dr.**
**Am Hexenpfad 21**
**D-6450 Hanau 1 (DE)**
Erfinder: **Kleinschmit, Peter, Dr.**
**Wildaustrasse 19**
**D-6450 Hanau 9 (DE)**
Erfinder: **Parkhouse, Alan**
**Bussardweg 31**
**D-5047 Wesseling (DE)**
Erfinder: **Wolff, Siegfried**
**Weiherstrasse 28**
**D-5303 Bornheim-Merten (DE)**

**EP 0 177 674 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft ein Verfahren zur Modifizierung von synthetischen silikatischen Füllstoffen mit Organosiliciumverbindungen deren Verwendung in vulkanisierbaren Kautschukmischungen.

Es ist bekannt, oxidische Oberflächen mit Organosiliciumverbindungen zu behandeln, um durch diese Vorbehandlung den Verbund zwischen oxidischem Füllstoff und organischen Polymeren unterschiedlichster chemischer Zusammensetzung und damit die verstärkenden Eigenschaften der Füllstoffe in den Polymeren zu verbessern.

Zu diesem Zweck kann man z.B. die betreffende Organosiliciumverbindung in einem organischen Lösungsmittel auflösen und mit dieser Lösung anschließend z.b. Clays behandeln (US—PS 3 227 675) Huber).

Aus der US—PS 3 567 680 ist bekannt, in Wasser suspendierte Kieselsäure mit Mercapto- und Aminosilanen zu modifizieren. Die betreffenden Organosiliciumverbindungen sind jedoch in den für die Modifizierung nötigen Mengen wasserlöslich, so daß auch in diesem Fall die Behandlung des Füllstoffs aus einer Lösung heraus erfolgt.

Die FR—A—2 295 958 betrifft Arylsilanpolysulfide und mit diesen Verbindungen behandelte mineralische Füllstoffe, die in Kautschukmischungen eingesetzt werden.

Die Herstellung erfolgt in einer wässrig/alkoholischen Formulierung, die 99,9 bis 80 Gew.-% Alkohol enthält.

Die Aufgabe der Erfindung besteht darin, ein Verfahren zur Modifizierung von synthetischen, silikatischen Füllstoffen, die an der Oberfläche OH-Gruppen aufweisen, mit wasserunlöslichen Organosiliciumverbindungen zu finden, bei dem man trotz der Wasserunlöslichkeit lösungsmittelfrei in wässriger Phase arbeiten kann.

Gegenstand der Erfindung ist ein Verfahren zur Modifizierung von synthetischen silikatischen Füllstoffen, die an der Oberfläche OH-Gruppen aufweisen mit mindestens einer Organosiliciumverbindung, wasserunlöslich ist und der Formel (I)

$$\text{(I)} \quad \left[ (RO)_{3-n}\overset{\overset{\large R^1_n}{|}}{Si}-(Alk)_m-(Ar)_p \right]_2 \left[ S \right]_x$$

entspricht,

in der bedeuten:

R und $R^1$ eine Alkylgruppe mit 1 bis 4 Kohlenstoffatomen, den Phenylrest, wobei alle Reste R und $R^1$ jeweils die gleiche oder eine verschiedene Bedeutung haben können, R eine $C_1$—$C_4$-Alkyl-$C_1$—$C_4$-Alkoxigruppe,

n: 0, 1 oder 2

Alk: einen zweiwertigen, geraden oder verzweigten Kohlenwasserstoffrest mit 1 bis 6 Kohlenstoffatomen,

n: 0 oder 1

Ar: einen Arylenrest mit 6 bis 12 C-Atomen,

p: 0 oder 1 mit der Maßgabe, daß p und m nicht gleichzeitig 0 bedeuten und

x: eine Zahl von 2 bis 8,

das dadurch gekennzeichnet ist, daß man

a) bis zu 80 Gew.% bezogen auf die Gesamtmenge der Emulsion, mindestens einer wasserunlöslich Organosiliciumverbindung mit der Formel I in Wasser emulgiert, gegebenenfalls in Anwesenheit einer oberflächenaktiven Substanz,

b) diese Emulsion mit der wässrigen Suspension eines synthetischen silikatischen, feinteiligen Füllstoffes oder einer Mischung verschiedener Füllstoffe bei einer Temperatur von 10 bis 50°C, unter Rühren vermischt, daß in der Suspension 0,3 bis 15 Gew.-% der Organosiliciumverbindung(en), bezogen auf den Füllstoff, enthalten sind,

c) das Gemisch gegebenenfalls auf eine Temperatur von 50 bis 100°C, bevorzugt von 60 bis 80°C aufheizt,

d) und nach Ablauf von 10 bis 120 min, bevorzugt von 30 bis 60 min, den modifizierten Füllstoff abfiltriert und bei Temperaturen von 100 bis 150°C, bevorzugt von 105 bis 120°C, trocknet oder die Suspension sprühtrocknet.

Die Organosiliciumverbindungen mit der Formel I können einzeln oder auch als Gemisch verschiedener Verbindungen in Wasser emulgiert werden. Beläuft sich die Gesamtmenge dieser Verbindungen nach der Vermischung mit der Suspension auf weniger als 3 Gew.-% (bezogen auf die wässrige Suspension), wird eine oberflächenaktive Substanz zur Unterstützung der Emulsionsbildung zugesetzt.

Dies ist bei Konzentrationen der Organosiliciumverbindung(en) ab 3 Gew.% nicht mehr notwendig, obwohl es hilfreich sein kann.

Man stellt die Emulsion bevorzugt bei Raumtemperatur her. Es sind aber auch Temperaturen geeignet, die bis zum Siedepunkt der wässrigen Emulsion reichen.

Die Konzentration der Organosiliciumverbindung(en) in der hergestellten Emulsion beläuft sich bevorzugt auf 10 bis 80 Gew.%, besonders bevorzugt 20 bis 50 Gew.%, bezogen auf die Gesamtmenge der Emulsion.

Der pH-Wert der Emulsion liegt ebenso wie der pH-Wert der Füllstoffsuspension nach dem Zumischen der Emulsion im schwach sauren oder schwach alkalischen, bevorzugt aber bei einem pH-Wert von etwa 7.

Unter dem verwendeten Begriff wasserunlöslich ist zu verstehen:

Nach dem Vermischen der Emulsion (ohne oberflächenaktive Substanz) mit der Suspension des Füllstoffs bildet sich um die Füllstoffteilchen herum im gewünschten pH- und Konzentrationsbereich keine klare Lösung der Organosiliciumverbindung(en). Es bleiben vielmehr die getrennten Phasen Wasser und Organosiliciumverbindung bestehen. Die oligosulfidischen Organosilane gemäß der oben angegebenen allgemeinen Formel I sind an sich bekannt und können nach bekannten Verfahren hergestellt werden. Beispiele für vorzugsweise eingesetzte Organosilane sind die z.B. nach der BE—PS 787 691 herstellbaren, Bis-(trialkoxysilyl-alkyl)-oligosulfide wie Bis-(trimethoxy-, triäthoxy-, trimethoxyäthoxy-, tripropoxy-, -tributoxy-, -tri-i-propoxy- und -tri-i-butoxy-silyl-methyl)-oligosulfide und zwar insbesondere die Di-, Tri-, Tetra-, Penta-, Hexasulfide usw., weiterhin Bis- (2-tri-methoxy-, -triäthoxy-, -trimethoxyäthoxy-, -tripropoxy- und -tri-n- und -i-butoxy- äthyl) -oligosulfide und zwar insbesondere die Di-, Tri-, Tetra-, Penta-, Hexasulfide usw., ferner die Bis-(3-trimethoxy-, -triäthoxy-, -trimethoxyäthoxy-, -tripropoxy-, -tri-n-butoxy- und tri-i-butoxy-silyl-propyl) oligosulfide und zwar wiederum die Di-, Tri-, Tetrasulfide usw bis zu Octasulfiden, des weiteren die entsprechenden Bis-(3-trialkoxysilylisobutyl)-oligosulfide, die entsprechenden Bis-(4-trialkoxysilylbutyl)-oligosulfide. Von diesen ausgewählten, relativ einfach aufgebauten Organosilanen der allgemeinen Formel I werden wiederum bevorzugt die Bis-(3-trimethoxy-, -triäthoxy- und tripropoxysilylpropyl)-oligosulfide, und zwar die Di-, Tri-, Tetra- und Pentasulfide, insbesondere die Triäthoxyverbindungen mit 2, 3 oder 4 Schwefelatomen und deren Mischungen. Alk bedeuten in der allgemeinen Formel I einen zweiwertigen, geraden oder verzweigten Kohlenwasserstoffrest, vorzugsweise einen gesättigten Alkylenrest mit gerader Kohlenstoffkette mit 1 bis 4 Kohlenstoffatomen.

Speziell geeignet sind auch die Silane mit der folgenden Strukturformel

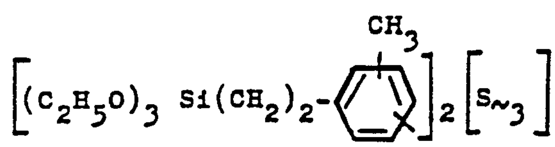,

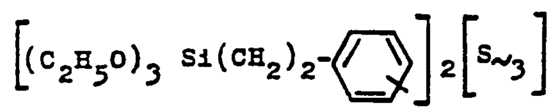 und deren

Methoxianaloge, herstellbar nach der DE—AS 25 58 191.

Als oberflächenaktive Substanzen finden bevorzugt nichtionogene, kationische und anionische Tenside Verwendung. Ihre Konzentration in der Emulsion beträgt 1 bis 7 Gew.%, bevorzugt 3 bis 5 Gew.%.

Beispiele für derartige Tenside sind Alkylphenolpolyglycolether, Alkylpolyglycolether, Polyglycole, Alkyltrimethylammoniumsalze, Dialkyldimethylammoniumsalze, Alkylbenzyltrimethylammoniumsalze, Alkylbenzolsulfonate, Alkylhydrogensulfate, Alkylsulfate.

Die zu modifizierenden synthetischen Füllstoffe, auch als Gemisch von zwei oder mehr dieser Füllstoffe, sind an sich in der Kautschuktechnologie bekannte Füllstoffe. Wesentliche Voraussetzung für ihre Eignung ist das Vorhandensein von OH-Gruppen an der Oberfläche der Füllstoffteilchen, die mit den Alkoxigruppen der Organosiliciumverbindungen reagieren können. Es handelt sich um synthetische silikatische Füllstoffe, die mit Kautschuken verträglich sind, und die für diese Verwendung notwendige Feinteiligkeit aufweisen.

Als synthetische Füllstoffe sind besonders feinteilige gefällte Kieselsäuren und pyrogen gewonnene Kieselsäuren geeignet.

— Die Emulsion wird in derartigen Mengen mit der Füllstoffsuspension vermischt, daß die Konzentration der Organosiliciumverbindung 0,3 bis 15 Gew.-%, bevorzugt 0,75 bis 15 Gew.-%, bezogen auf die Füllstoffmenge beträgt.

Die modifizierten Füllstoffe enthalten 0,3 bis 15 Gew.%, bevorzugt 0,75 bis 6 Gew.-% der Organosiliciumverbindungen, bezogen auf den trockenen Füllstoff.

Sie sind besonders geeignet zur Verwendung in vulkanisier- und formbaren Kautschukmischungen, die nach den üblichen Verfahren in der Gummiindustrie hergestellt werden.

Eine nachteilige Wirkung der auf den Füllstoffoberflächen eventuell adsorbierten oberflächenaktiven Substanzen ist nicht festzustellen.

Zu den geeigneten Kautschukarten zählen alle noch Doppelbindungen enthaltende und mit Schwefel

sowie Vulkanisationsbeschleuniger(n) zu Elastomeren vernetzbare Kautschuke und deren Gemische. Insbesondere sind dies die halogenfreie Kautschukarten, vorzugsweise sogenannte Dien-Elastomere. Zu diesen Kautschukarten zählen beispielsweise, gegebenenfalls ölgestreckte, natürliche und synthetische Kautschuke, wie Naturkautschuke, Butadienkautschuke, Isoprenkautschuke, Butadien-Styrol-Kautschuke, Butadien-Acrylnitril- Kautschuke, Butylkautsckuke, Terpolymere aus Äthylen, Propylen und zum Beispiel nichtkonjugierten Dienen. Ferner kommen für Kautschukgemische mit den genannten Kautschuken die folgenden zusätzlichen Kautschuke infrage:

Carboxylkautschuke, Epoxidkautschuke, Trans-Polypentenamer, halogenierte Butylkautschuke, Kautschuke aus 2-Chlor-Butadien, Äthylen-Vinylacetat-Copolymere, Äthylen-Propylen-Copolymere, gegebenenfalls auch chemische Derivate des Naturkautschuks sowie modifizierte Naturkautschuke. Vorzugsweise werden Naturkautschuke und Polyisopren-Kautschuke eingesetzt und zwar allein oder in Mischungen miteinander und/oder jeweils in Mischung mit den obengenannten Kautschuken.

Der modifizierte Füllstoff wird in der Menge zugemischt, daß der Gewichtsanteil der auf ihm enthaltenen Organosiliciumverbindung zwischen 0,3 und 10 Gew.-%, bevorzugt zwischen 0,75 und 6 Gew.-%, bezogen auf den Kautschukanteil, liegt. Dabei ist natürlich der vorgeschriebene Gesamtanteil des Füllstoffs in der vulkanisierbaren Kautschukmischung zu beachten. Das bedeutet, daß sowohl die Gesamtmenge des einzusetzenden Füllstoffs als auch eine Teilmenge modifiziert sein kann. Im letzteren Fall ist der noch fehlende Teil dann in nicht modifizierter Form zuzumischen.

Die erfindungsgemäß hergestellten modifizierten Füllstoffe führen in den vulkanisierten Kautschukmischungen zu einer deutlichen Verbesserung der gummitechnischen Eigenschaften im Vergleich zu Mischungen ohne modifizierte Füllstoffe.

Die modifizierten Füllstoffe werden in folgenden Kautschukmischungen getestet:

Testrezeptur 1 — Naturkautschuk

| | |
|---|---|
| RSS 1, ML 4 = 67 | 100 |
| Füllstoff | 50 |
| ZnO, RS | 4 |
| Stearinsäure | 2 |
| Vulkacit® CZ | 2 |
| Schwefel | 2 |

Testrezeptur 2 — SBR 1500

| | |
|---|---|
| Buna Hüls® 1500 | 100 |
| Füllstoff | 50 |
| ZnO RS | 4 |
| Stearinsäure | 2 |
| Vulkacit® CZ | 2,25 (N-Cyclohexyl-2-benzothiazolsulfenamid) |
| Schwefel | 2 |

Bei dem verwendeten Emulgator, der Organosiliciumverbindung und den Füllstoffen handelt es sich um folgende Produkte:

Emulgator
Marlowet® GFW = Alkylphenolpolyglycolether.

Organosiliciumverbindung
Si 69 = Bis-(3-triethoxisilylpropyl)-tetrasulfan.

Füllstoffe
Ultrasil® VN 3 — Gefällte Kieselsäure (Degussa)
Aerosil® 130V — Pyrogene Kieselsäure (Degussa).

Zur Beurteilung der gummitechnischen Eigenschaften der Vulkanisate werden folgende Werte ermittelt:

| | |
|---|---|
| Mooney-Viskosität | gemäß DIN 53 523 |
| Zugfestigkeit | gemäß DIN 53 504 |
| Spannungswert = Modul | gemäß DIN 53 504 |
| Weiterreißwiderstand | gemäß DIN 53 507 |
| Firestone Ball Rebound | gemäß AD 20 245 |
| Shore-A-Härte | gemäß DIN 53 505 |
| Abriebwiderstand | gemäß DIN 53 516 |

Beispiel 1

Zu einer wässrigen Tensidlösung mit einer Konzentration von 40 g/l wird unter starkem Rühren Si 69 zugegeben, so daß die Konzentration an Si 69 in der gebildeten Emulsion 90 g/l beträgt. Sofort nach der Zubereitung wird diese Emulsion in eine Suspension von 1,5 kg Aerosil® 130V in 50 kg Wasser bei 40°C unter Rühren gegeben.

Die Suspension wurde auf 85°C aufgeheizt, anschließnd filtriert und getrocknet. In einem Versuch wurde auf das Aufheizen verzichtet. Das getrocknete Material wurde zuerst auf einer Zahnscheibenmühle und anschließend auf einer Stiftmühle vermahlen.

Beispiel 2

Die Vorgehensweise erfolgte analog Beispiel 1. Als Emulgator wurde Marlowet® GFW eingesetzt. Es wurden 3,0 Gewichtsteile Silan auf 100 Gewichtsteile Ultrasil® VN 3 aufgebracht. Das hiermit erhaltene Produkt wurde wiederum in Natur- und Synthesekautschuk eingearbeitet.

Ergebnisse:

Die Tabellen 1—4 zeigen die erhaltenen Resultate. Es kann festgestellt werden, daß für das wasserunlösliche Si 69 eine Modifizierung des Füllstoffs nach dem Naßverfahren mit Emulgator eine Erhöhung der gummitechnischen Eigenschaften gegenüber dem nicht-modifizierten Füllstoff erzielt wird.

In Naturkautschuk werden durch Einsatz von mit Si 69 modifizierten Aerosil® 130V bzw. Ultrasil® VN 3 Mischungsplastizität, Zerreißfestigkeit, Modul, Einreißfestigkeit, Rückprallelastizität und Abriebwiderstand deutlich verbessert.

Beim Buna Hüls 1500 Synthesekautschuk sind durch Einsatz von o.g. mit Si 69 modifizierten Kieselsäuren Erhöhungen in Modul, Rückprallelastizität und Abriebwiderstand zu verzeichnen. Im Falle mit Si 69 modifiziertem Aerosil® 130V bzw. Ultrasil® VN 3 in Buna Hüls® 1500 wird die Mischungsplastizität verbessert, während Einsatz von mit Si 69 silanisiertem VN 3 zusätzlich zu einer Zerreißfestigkeitserhöhung führt.

Beispiel 3

Modifizierte pyrogene Kieselsäure in Naturkautschuk

| Tabelle 1: | | 1 | 2 |
|---|---|---|---|
| RSS 1, ML 4 = 67 | | 100 | 100 |
| Aerosil® 130V | | 50 | — |
| Mit Si 69 modifiziertes Aerosil® (6 GT auf 100 GT Aerosil) | | — | 50 |
| ZnO, RS | | 4 | 4 |
| Stearinsäure | | 2 | 2 |
| Vulkacit® CZ | | 2 | 2 |
| Schwefel | | 2 | 2 |
| ML 4 100°C | (Punkte) | 145 | 78 |
| Zerreißfestigkeit | (MPa) | 15,1 | 23,9 |
| Spannungswert 300% | (MPa) | 3,1 | 9,4 |
| Bruchdehnung | (%) | 700 | 560 |
| Weiterreißwiderstand | (N/mm) | 14 | 38 |
| Firestone Ball Rebound | (%) | 50,4 | 59,5 |
| Shore Härte | (Grad) | 70 | 62 |
| Abrieb | ($mm^3$) | 222 | 123 |

Beispiel 4
Modifizierte pyrogene Kieselsäure in Synthesekautschuk

| Tabelle 2: | | 1 | 2 |
|---|---|---|---|
| Buna Hüls® 1500 (SBR) | | 100 | 100 |
| Aerosil® 130V | | 50 | — |
| Mit Si 69 modifiziertes Aerosil® (6 GT auf 100 GT Aerosil®) | | — | 5 0 |
| ZnO, RS | | 4 | 4 |
| Stearinsäure | | 2 | 2 |
| Vulkacit® CZ | | 2,25 | 2,25 |
| Schwefel | | 2 | 2 |
| ML 4 100°C | (Punkte) | 170 | 127 |
| Zerreißfestigkeit | (MPa) | 17,9 | 17,8 |
| Spannungswert 300% | (MPa) | 4,2 | 12,0 |
| Bruchdehnung | (%) | 67 0 | 390 |
| Weiterreißwiderstand | (N/mm) | 23 | 10 |
| Firestone Ball Rebound | (%) | 44,4 | 45,4 |
| Shore Härte | (Grad) | 74 | 67 |
| Abrieb | ($mm^3$) | 134 | 82 |

Beispiel 5
Modifizierte gefällte Kieselsäure in Naturkautschuk

| Tabelle 3: | | 1 | 2 |
|---|---|---|---|
| RSS 1, ML 4 = 67 | | 100 | 100 |
| Ultrasil® VN 3 | | 50 | — |
| Mit Si 69 modifiziertes VN 3 (3 GT auf 100 GT Ultrasil® VN 3) | | — | 50 |
| ZnO, RS | | 4 | 4 |
| Stearinsäure | | 2 | 2 |
| Vulkacit® CZ | | 2 | 2 |
| Schwefel | | 2 | 2 |
| ML 4 100°C | (Punkte) | 160 | 121 |
| Zerreißfestigkeit | (MPa) | 15,8 | 17,9 |
| Spannungswert 300% | (MPa) | 3,9 | 5,9 |
| Bruchdehnung | (%) | 640 | 580 |

Beispiel 5
Modifizierte gefällte Kieselsäure in Naturkautschuk

| Tabelle 3: | | 1 | 2 |
|---|---|---|---|
| Weiterreißwiderstand | (N/mm) | 11 | 22 |
| Firestone Ball Rebound | (%) | 57,5 | 60,2 |
| Shore Härte | (Grad) | 64 | 63 |
| Abrieb | ($mm^3$) | 218 | 174 |

Beispiel 6
Modifizierte gefällte Kieselsäure in Synthesekautschuk

| Tabelle 4: | | 1 | 2 |
|---|---|---|---|
| Buna Hüls® 1500 (SBR) | | 100 | 100 |
| Ultrasil® VN 3 | | 50 | — |
| Mit Si 69 modifiziertes VN 3 (3 GT auf 100 GT Ultrasil® VN 3) | | — | 50 |
| ZnO, RS | | 4 | 4 |
| Stearinsäure | | 2 | 2 |
| Vulkacit® CZ | | 2,25 | 2,25 |
| Schwefel | | 2 | 2 |
| ML 4 100°C | (Punkte) | 144 | 125 |
| Zerreißfestigkeit | (MPa) | 12,8 | 16,5 |
| Spannungswert 300% | (MPa) | 3,7 | 8,5 |
| Bruchdehnung | (%) | 630 | 470 |
| Weiterreißwiderstand | (N/mm) | 18 | 11 |
| Firestone Ball Rebound | (%) | 42,9 | 47,6 |
| Shore Härte | (Grad) | 65 | 67 |
| Abrieb | ($mm^3$) | 148 | 101 |

**Patentanspruch**

Verfahren zur Modifizierung von synthetischen silikatischen Füllstoffen, die an der Oberfläche OH-Gruppen aufweisen, mit mindestens einer Organosiliciumverbindung, die wasserunlöslich ist und der Formel (I)

$$\text{(I)}\qquad \left[ (RO)_{3-n}\overset{R^1_n}{\overset{|}{Si}}-(Alk)_m-(Ar)_p \right]_2 \left[ S \right]_x$$ entspricht,

in der bedeuten:
R und $R^1$ eine Alkylgruppe mit 1 bis 4 Kohlenstoffatomen, den Phenylrest, wobei alle Reste R und $R^1$

jeweils die gleiche oder eine verschiedene Bedeutung haben können, R eine $C_1$—$C_4$-Alkyl-$C_1$—$C_4$-Alkoxigruppe,

n: 0, 1 oder 2

Alk: einen zweiwertigen, geraden oder verzweigten Kohlenwasserstoffrest mit 1 bis 6 Kohlenstoffatomen,

m: 0 oder 1

Ar: einen Arylenrest mit 6 bis 12 C-Atomen

p: 0 oder 1 mit der Maßgabe, daß p und m nicht gleichzeitig 0 bedeuten und

x: eine Zahl von 2 bis 8,

dadurch gekennzeichnet, daß man

a) bis zu 80 Gew.-% bezogen auf die Gesamtmenge der Emulsion, mindestens einer Organosiliciumverbindung gemäß der Formel (I) in Wasser emulgiert, gegebenenfalls in Anwesenheit einer oberflächenaktiven Substanz

b) diese Emulsion mit der wässrigen Suspension eines silikatischen, synthetischen Füllstoffs bei einer Temperatur von 10 bis 50°C unter Rühren vermischt, daß in der Suspension 0,3 bis 15 Gew.-% der Organosiliciumverbindung(en) gemäß Formel (I), bezogen auf den Füllstoff, enthalten sind,

c) das Gemisch gegebenenfalls auf eine Temperatur von 50 bis 100°C aufheizt und

d) nach Ablauf von 10 bis 120 min den Füllstoff abfiltriert und bei 100 bis 150°C trocknet oder die Suspension sprühtrocknet.

**Revendication**

Procédé de modification de charges synthétiques silicatées, qui présentent à la surface des groupes OH avec au moins composé organosilicium insoluble dans l'eau et qui répond à la formule (I):

$$\text{(I)} \quad \left[ (RO)_{3-n}\overset{\overset{\displaystyle R^1_n}{|}}{Si}-(Alk)_m-(Ar)_p \right]_2 \left[ S \right]_x$$

dans laquelle représentent:

R et $R^1$ un groupe alkyle de 1 à 4 atomes de carbone, le reste phényle, tous les restes R et $R^1$ pouvant avoir une signification identique ou différente, R est un groupe alkyl $C_1$—$C_4$-alcoxy-$C_1$—$C_4$,

n: 0, 1 ou 2

Alk: un reste hydrocarboné bivalent, linéaire ou ramifié avec 1 à 6 atomes de carbone,

m: un reste aryle de 6 à 12 atomes de C,

p: 0 ou 1, à la condition que p et m ne sont 0 simultanément et

x: un nombre compris entre 2 et 8,

caractérisé en ce qu'on:

a) émulsionne jusqu'à 80% en poids, par rapport à la quantité totale d'émulsion, au moins un composé organosilicium de formule I, dans l'eau, le cas échéant en présence d'une substance tensio-active,

b) mélange cette émulsion avec la suspension aqueuse d'une charge fine synthétique silicatée ou d'un mélange de différentes charges, à une température de 10 à 50°C, sous agitation, la suspension comprenant 0,3 à 15% en poids de composés organosilicium par rapport à la charge,

c) on chauffe le mélange le cas échéant à une température de 50 à 100°C, de préférence de 60 à 80°C,

d) et après 10 à 120 min, de préférence 30 à 60 min, on filtre la charge modifiée et sèche à des températures comprises entre 100 et 150°C, de préférence 105 à 120°C, sèche ou atomise la suspension.

**Claim**

A process for the modification of synthetic silicate fillers bearing OH groups at the surface with at least one water-insoluble organosilicon compound corresponding to formula (I)

$$\text{(I)} \quad \left[ (RO)_{3-n}\overset{\overset{\displaystyle R^1_n}{|}}{Si}-(Alk)_m-(Ar)_p \right]_2 \left[ S \right]_x$$

in which

R and $R^1$ may be the same or different and represent a $C_{1-4}$-alkyl group, the phenyl radical; R may also be a $C_{1-4}$-alkyl-$C_{1-4}$-alkoxy group,

n = 0, 1 or 2,
Alk is a difunctional, linear or branched $C_{1-6}$ hydrocarbon radical,
m = 0 or 1,
Ar is a $C_{6-12}$ arylene radical,
p = 0 or 1, with the proviso that p and m cannot both be 0 and
x is a number of 2 to 8, characterized in that

a) up to 80% by weight, based on the total weight of the emulsion, of at least one organosilicon compound corresponding to formula (I) is emulsified in water, optionally in the presence of a surfactant,

b) the emulsion is mixed while stirring with an aqueous suspension of a synthetic silicate filler at a temperature of 0 to 50°C, the suspension containing 0.3 to 15% by weight of the organosilicon compound(s) corresponding to formula (I), based on the filler,

c) the mixture is optionally heated to a temperature of 50 to 100°C and

d) after 10 to 120 minutes, the filler is filtered off and dried at 100 to 150°C or the suspension is spray-dried.